# EUROPEAN PATENT SPECIFICATION

(11) **EP 2 765 177 B1**
(45) Date of publication and mention of the grant of the patent: **22.11.2017**
(21) Application number: 12858860.5
(22) Date of filing: 03.10.2012
(51) Int. Cl.: C10J 3/02, C10J 3/26, C10J 3/30, C10J 3/72, C10J 3/74, C10K 1/02, C10K 1/06

(54) **GASIFICATION SYSTEM**
VERGASUNGSSYSTEM
SYSTÈME DE GAZÉIFICATION

(30) Priority: 22.12.2011 JP 2011282094
(43) Date of publication of application: 13.08.2014
(73) Proprietor: Yanmar Co., Ltd., Osaka-shi, Osaka 530-8311 (JP)
(72) Inventor: WAKIZAKA, Hiroaki, Osaka-shi, Osaka 530-8311, (JP); AKASAKA, Futoshi, Osaka-shi, Osaka 530-8311 (JP); SATO, Kazuo, Osaka-shi, Osaka 530-8311 (JP); NARUMI, Yoshinari, Osaka-shi, Osaka 530-8311 (JP)
(74) Representative: Hinkelmann, Klaus
(86) International application number: PCT/JP2012/075604
(87) International publication number: WO 2013/094279

(56) References cited:
- EP-A2- 0 117 765
- WO-A1-03/018721
- JP-A- H06 184 560
- JP-A- 2010 215 810
- JP-U- H02 118 735
- JP-Y1- S2 510 136
- US-A- 3 568 612

## Description

### Technical Field

The present invention relates to a gasification system, specifically to a technique for controlling fuel fed in a gasification furnace.

### Background Art

Conventionally, as a gasification system that gasifies biomass fuel (hereinafter referred to as the "fuel"), up draft type systems and down draft type systems are known. In the up draft type system, air as a gasification agent is supplied from a lower portion of a furnace and the air flows upward. In the down draft type system, air is supplied from an upper portion of the furnace and the air flows downward.

In the up draft type gasification system, an oxidation layer where the fuel is burned has the highest temperature, but a dry distillation layer and a dry layer, which are upper layers of the oxidation layer, have relatively low temperatures. Tar produced in the dry distillation layer does not pass the oxidation layer and a reduction layer both having the high temperatures, and passes only the low temperature portion, thus the tar is not dissolved. For this reason, there is a problem that the tar is easily produced. In contrast, in the down draft type gasification system, the dry distillation layer where the tar is produced is located on an upper position of the oxidation layer. For this reason, the tar passes the oxidation layer having a high temperature and the reduction layer located below. Thus, this system is effective to reduce the tar.

Also, in the down draft type gasification systems, there is a type in which a nozzle is provided from the side of the furnace toward the center inside the furnace. Air is supplied through the nozzle into the furnace. In such a type of the gasification system, the air is fed from a side portion of the furnace. Thus, in the fuel, a portion having a high temperature equal to or more than 1200°C (hot spot) is formed. Since ash of the fuel is melted in a temperature range of 1200°C to 1500°C, the ash is melted in the hot spot to produce clinker. In contrast, a portion having a low temperature (cool spot) is made because heat is not transmitted enough, and from the cool spot, the tar is produced.

A gasification system is known into which fuel and air are introduced from above the furnace to resolve the above problems of the hot spot and the cool spot (for example, see Patent Document 1). This gasification system includes a gasification furnace gasifying the fuel, a supply conveyor supplying the fuel to the gasification furnace and an inner cylinder introducing the fuel into the gasification furnace. It is configured to burn the fuel inside the inner cylinder.

### Prior Art Reference

### Patent Document

[Patent Document 1] JP 2010-215810 A
EP 0 117 765 A2 discloses a gasifier for generating a producer gas output from a cellulosic waste material input that has an axially aligned top fuel feed down onto a conical grate with a provision for removing fuel pile ash from around the base perimeter of the grate. A preferred embodiment includes means for adjusting the fuel feed above the level of the grate and to control underfire admission air through plenums 50A to 50E from beneath the grate so as to control the fuel pile size. An annular top opening is provided for guiding producer gas from the chamber. A producer gas burner has a cyclonic combustion chamber with an upper inlet for spirally directing producer gas down into the chamber and secondary combustion air inlet means at the lower end of the chamber for directing secondary air tangentially and upwardly into the chamber. An exhaust outlet is disposed at the lower end of the chamber with an exhaust inlet axially aligned with the chamber. In an embodiment, the gasifier and burner are combined using a double scrolled duct to transport producer gas from the gasifier to the burner, and the gasifier and burner share a common ash removal system. Several sensors can be provided to obtain information on the supply. EP 0 117 765 A2 is concerned with improvements in the design of the gasifier so as to better accommodate cellulosic waste material fuel, which has a wide range of moisture from the very dry to the very wet and the introduction of an ash removal system so that a continuous and balanced flow of non-gaseous material from the time raw fuel enters the feed tube until the time fuel pile ash is removed from the annular base region takes place.

### Summary of the Invention

### Problem to be Solved by the Invention

In the gasification system according to Patent Document 1, when the fuel reaches from the bottom portion of the furnace to at least a lower end opening of the inner cylinder (when the lower end opening of the inner cylinder is plugged by the fuel), it is possible to gasify the fuel. In the event that the fuel does not exist in the inner cylinder, air is sucked downward from the inner cylinder, and the air that has fallen out from the inner cylinder becomes a wall surface flow flowing downward along the inner surface of the gasification furnace. Thus, the central portion of the fuel lacks the air because the air does not go there sufficiently. Like this, the lack of the amount of air results in production of tar because of the fuel that cannot have a sufficient high temperature.

Furthermore, when the accumulated amount of the fuel inside the inner cylinder is too much compared with a predetermined amount, the fuel forms a bridge inside the inner cylinder due to a repose angle and the like. This bridge phenomenon of the fuel degrades a combustion efficiency of the fuel and it is not possible to carry out gasification of the fuel with high efficiency. In the present invention, the feeding amount of fuel to the inner cylinder is controlled so that a height of the accumulated fuel in the inner cylinder is coincident with the inside furnace level target value. Thus, objects of the present invention are to stabilize gasification, and to prevent production of tar and production of clinker caused by melting of ash.

### Means for Solving Problem

The present invention is made to resolve the above problem and provides a gasification system that comprises: a gasification furnace configured to gasify fuel; a fuel supply apparatus configured to supply fuel to the gasification furnace; and an inner cylinder configured to introduce the fuel and air into the gasification furnace, the inner cylinder being included in the gasification furnace; wherein a height from a lower end opening in the inner cylinder to a predetermined height position is set as an inside furnace level target value (H1), and an inside furnace level upper limit (Hh) is set. The gasification system further includes: a fuel detection unit configured to detect, as an inside furnace level (H), an accumulated height of the fuel accumulated inside the inner cylinder; and a control apparatus configured to determine the inside furnace level (H) and control the fuel supply apparatus, wherein, when the inside furnace level (H) is determined to be equal or higher than the inside furnace level upper limit (Hh), the fuel supply apparatus is stopped, and when the inside furnace level (H) is determined to be lower than the inside furnace level upper limit (Hh), a deviation (value (H1) and the inside furnace level (H) is obtained and the fuel supply so that the inside furnace level (H) is coincident with the inside furnace level target value H1).

In the gasification system, the inside furnace level of the fuel changes according to the combustion state inside the furnace. It is possible to generate a stable gas containing only a small amount of tar by controlling the feeding amount of the fuel to maintain the fuel level suitable for gasification.

Also, due to the inner cylinder introducing the fuel and the air into the gasification furnace, it is possible to form a heat-insulating layer (heat-insulating layer that covers the outer periphery of the inner cylinder 23) that is made by a high temperature gas partially remaining in a space of a double structure of the inner cylinder and the gasification furnace main body. Therefore, the heat-insulating layer can cover the outer periphery of the inner cylinder, and thus, with the gas in the heat-insulating layer, the temperature inside the inner cylinder can become high enough to reduce the tar (for example, substantially 1000°C). Thus, in contrast to the conventional art, it is not necessary to dispose a nozzle to supply air, and production of clinker caused by the locally high temperature can be prevented.

In the gasification system, the fuel detection unit may be constituted by a level sensor that is inserted into the inner cylinder, from above, so as to make contact with the fuel, and that measures the inside furnace level.

In the gasification system, the fuel detection unit may be constituted by a pressure sensor that measures a pressure of a space inside the gasification furnace.

In the gasification system, the fuel detection unit may be constituted by a temperature sensor that measures a temperature of a space inside the gasification furnace.

In the gasification system, a constricted portion whose opening area is set to be small may be located at a position lower than a lower end of the inner cylinder in the gasification furnace.

There occurs an abnormal situation due to lowering of the fuel level inside the inner cylinder, that is, the level of the fuel becomes lower than the lower end opening of the inner cylinder. In such a case, the air that has passed through the inner cylinder expands along the fuel, thus a wall flow that intends to pass the inner peripheral surface of the gasification furnace. In the present invention, the constricted portion is provided on the inner peripheral surface of the gasification furnace. The air is drawn, along the constricted portion, to the central portion of the gasification furnace. As a result, the temperature of the fuel that exists in the constricted portion becomes high, thereby an oxidation layer is formed in the constricted portion. Thus, the gasification is accelerated. In addition, the tar produced due to generation of the wall flow necessarily passes through the high temperature portion of the constricted portion. Therefore, problems caused by the tar can be reduced.

### Effects of the Invention

The present invention includes: the fuel detection unit that is configured to detect, as the inside furnace level, an accumulated height of the fuel accumulated inside the inner cylinder; and the control apparatus is configured to obtain a deviation between the inside furnace level target value (H1) and the inside furnace level (H), and to control the fuel supply apparatus according to the deviation so that the inside furnace level is coincident with the inside furnace level target value. Although the inside furnace level of the fuel changes according to the combustion state inside the furnace, it is possible to control the feeding amount of the fuel to maintain the fuel level suitable for gasification. As a result, it is possible to generate a stable gas containing only a small amount of tar and to prevent production of clinker caused by melting of ash.

### Brief Description of Drawings

[FIG. 1] FIG. 1 is a diagram showing a gasification system according to an embodiment of the present invention.
[FIG. 2] FIG. 2 is a side cross-sectional view showing a gasification furnace included in the gasification system according to the above embodiment.
[FIG. 3] FIG. 3 is a diagram showing a relationship between a frequency controlling a fuel supply apparatus of the gasification system and a feeding amount of fuel according to the above embodiment.
[FIG. 4] FIG. 4 is a block diagram showing control of the fuel supply apparatus of the gasification system according to the above embodiment.
[FIG. 5] FIG. 5 is a block diagram of the fuel supply apparatus of the gasification system according to the above embodiment.
[FIG. 6] FIG. 6 is a flow diagram showing control of the fuel supply apparatus of the gasification system according to the above embodiment.

### Modes for Carrying out the Invention

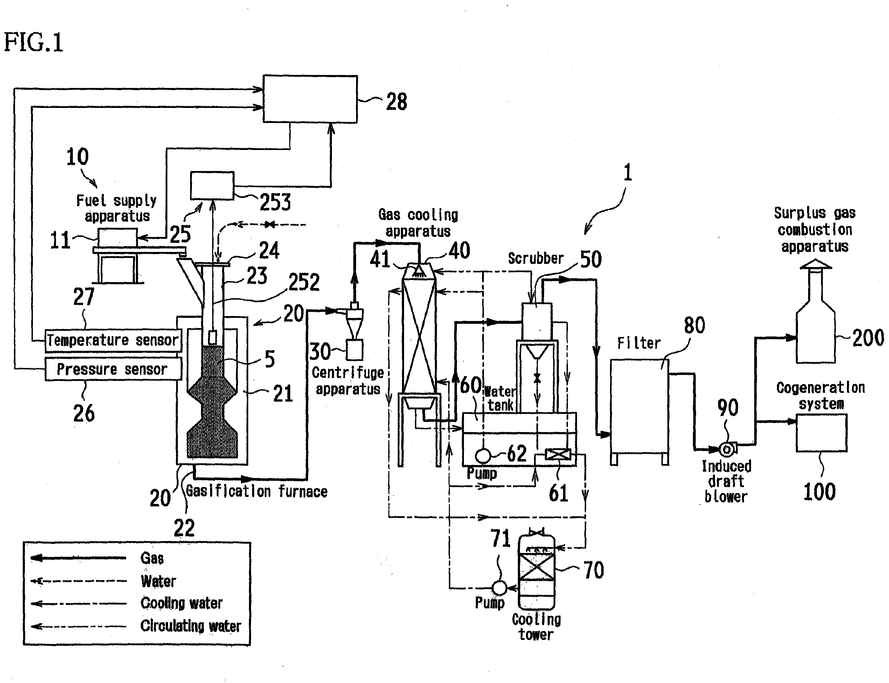

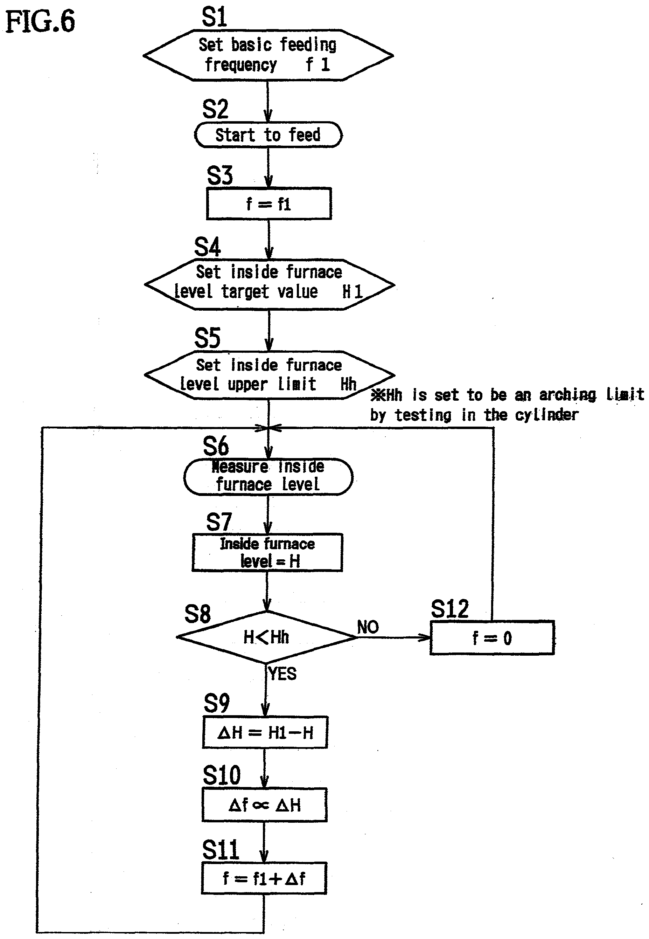

Hereinafter, a specific embodiment of the present invention will be described with reference to the drawings. FIGS. 1 to 6 show an embodiment of the present invention.

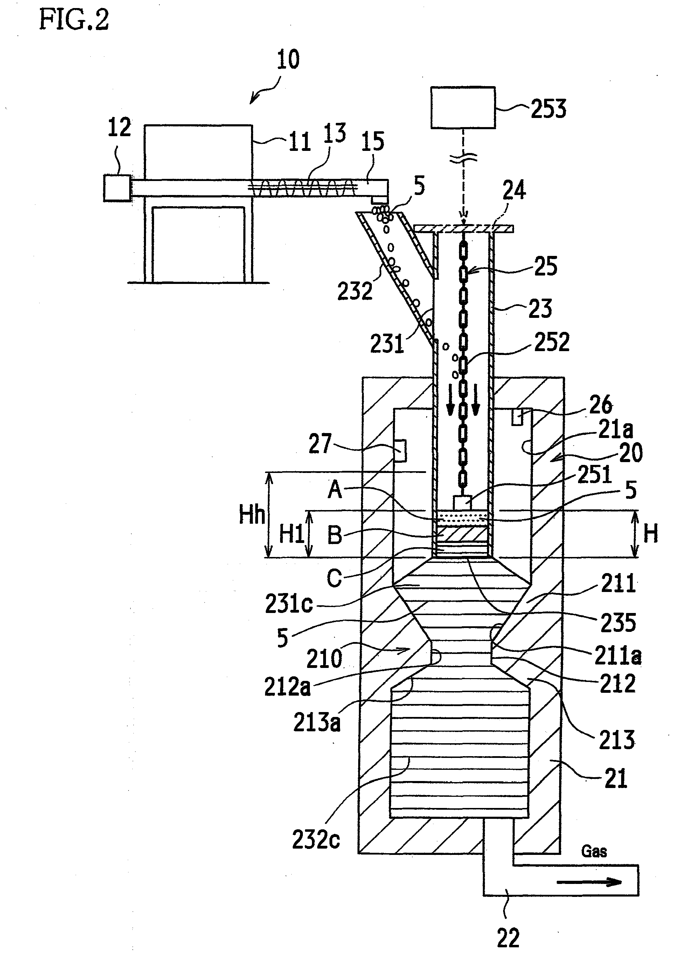

First, a gasification system 1 will be generally described. As shown in FIGS. 1 and 2, the gasification system 1 is a woody biomass power plant using, for example, a woody material as fuel. The gasification system 1 includes a fuel supply apparatus 10, a gasification furnace 20, a centrifuge apparatus 30, a gas cooling apparatus (heat exchanger) 40, a scrubber 50, a water tank 60, a cooling tower 70, a filter 80, an induced draft blower 90, an engine generating apparatus 100, a surplus gas combustion apparatus 200 and the like.

As shown in FIG. 2, the fuel supply apparatus 10 supplies fuel to the gasification furnace 20. The fuel supply apparatus 10 includes a hopper 11, a motor 12 and a screw 13 to discharge fuel. A horizontal cylinder portion 15 is connected to the bottom portion of the hopper 11, and the screw 13 is rotatably provided in the cylinder portion 15.

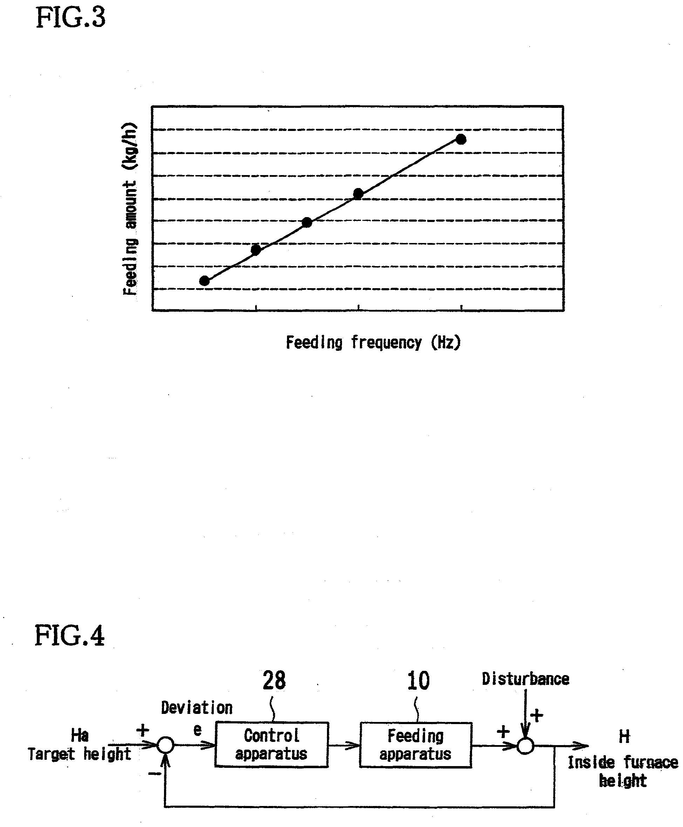

By controlling a frequency (feeding frequency) of the motor 12 by an inverter, a rotation speed of the screw 13 is controlled, thus a feeding amount of fuel to the gasification furnace 20 can be adjusted. As shown in FIG. 3, the relationship between the feeding frequency and the feeding amount of fuel is a linear relationship. For this reason, by controlling the feeding frequency according to a combustion state in the gasification furnace 20, the feeding amount of fuel per unit time can be controlled. For example, the rotation speed of the screw 13 is increased by increasing the feeding frequency of the motor 12, and according to the increase of the feeding frequency, the feeding amount of fuel can be increased.

The gasification furnace 20 gasifies the fuel from the fuel supply apparatus 10. In the gasification furnace 20, a gasification agent (air) is supplied to accelerate the gasification of the fuel. In FIG. 1, the dashed line arrow indicates a path through which the "air" flows.

The centrifuge apparatus 30 removes large particles of dust and the like contained in the gas from the gasification furnace 20 by centrifugation. In FIG. 1, the solid line arrow indicates a path through which the "gas" flows.

The heat exchanger 40 is a gas cooling apparatus to cool the gas from the centrifuge apparatus 30. The heat exchanger 40 includes a water spray nozzle 41 that cleans the gas.

The scrubber 50 cleans and cools the gas from the heat exchanger 40 by water. In the water tank 60, the water to be supplied to the scrubber 50 and the heat exchanger 40 is stored. The water tank 60 includes a heat exchanger 61.

The water in the water tank 60 is fed to the water spray nozzle 41 and the scrubber 50 under pressure by a pump 62. The water fed from the water tank 60 returns into the water tank 60 from the heat exchanger 40 and the scrubber 50. That is, the water in the water tank 60 contains soot, tar and the like that are contained in the gas. Hereinafter, the water in the water tank 60 is referred to as "circulating water". In FIG. 1, the dashed-two dotted line arrow indicates a path through which the "circulating water" flows.

In the cooling tower 70, the water to be supplied to the heat exchanger 40 and the heat exchanger 61 is stored. The water in the cooling tower 70 is fed to the heat exchanger 40 and the heat exchanger 61 under pressure by a pump 71.

The water fed from the cooling tower 70 returns into the cooling tower 70 from the heat exchanger 40 and the heat exchanger 61. The water in the cooling tower 70 cools the circulating water in the water tank 60 indirectly (so as not to be mixed with the circulating water in the water tank 60) by heat exchanger 61. The water in the cooling tower 70 also cools the gas indirectly (so as not to be mixed with the gas) by the heat exchanger 40. That is, the water in the cooling tower 70 does not contain the soot, tar and the like contained in the gas. Hereinafter, the water in the cooling tower 70 is referred to as "cooling water". In FIG. 1, the dashed-dotted line arrow indicates a path through which the "cooling water" flows.

The filter 80 filters small particles of dust and the like contained in the gas. The induced draft blower 90 induces the gas from the gasification furnace 20 to the side of the engine generating apparatus 100 by a negative pressure operation. The engine generating apparatus 100 drives a generator by a gas engine. The surplus gas combustion apparatus 200 burns the surplus gas.

Next, the gasification furnace 20 will be described in detail. The gasification furnace 20 includes: a gasification furnace main body 21 made of an outer cylinder; and an inner cylinder 23. At the lower side of the gasification furnace main body 21, a gas discharge port 22 is provided. Residue (ash and the like after gasification) in the gasification furnace 20 is discharged outside the gasification furnace 20 by a discharge conveyer (not shown). The inner cylinder 23 protrudes upward on the upper end portion of the gasification furnace 20.

The inner cylinder 23 is a cylinder shaped member into which fuel is introduced. The inner cylinder 23 is vertically provided so that its axis center is coincident with the axis center of the gasification furnace main body 21. The upper and lower end portions of the inner cylinder 23 are opened. The upper end opening of the inner cylinder 23 may be closed by a lid 24.

The lower portion of the inner cylinder 23 is inserted into the gasification furnace main body 21 from above so as to vertically provided in the gasification furnace main body 21. A lower end opening 235 is located in the middle of the gasification furnace 20. The upper portion of the inner cylinder 23 protrudes upward from the upper end portion of the gasification furnace 20. The gasification agent (air) is introduced from the upper end portion (one portion) of the inner cylinder 23. At one portion of the outer periphery of the upper portion of the inner cylinder 23, a feed port 231 is opened to feed the fuel from the fuel supply apparatus 10.

An end portion of a feed tube 232 is connected to the feed port 231. The other end portion of the feed tube 232 is provided so as to extend obliquely upward. From the other end portion of the feed tube 232, fuel 5 that is come from the fuel supply apparatus 10 is fed.

The gasification furnace main body 21 has a constricted portion 210 that is located under the lower end opening 235 of the inner cylinder 23. The constricted portion 210 is formed by a ring-shaped convex portion of the gasification furnace main body 21 that extends in the central direction. The constricted portion 210 is constituted by a narrowing opening 211, a throat portion 212 and an expanding opening 213. The narrowing opening 211 has an inclined surface 211a in which an opening area of an inner peripheral surface 21a of the gasification furnace main body 21 gradually decreases downward. The throat portion 212 has an opening 212a extending downward from the lower end of the narrowing opening 211. The expanding opening 213 has an inclined surface 213a in which the opening area gradually increases from the throat portion 212.

Specifically, the opening area of the upper end of the narrowing opening 211 is set to be equal to the opening area formed by the inner peripheral surface 21a of the gasification furnace main body 21. The opening area of the lower end of the narrowing opening 211 is set to be equal to the opening area of the throat portion 212, and furthermore, is set to be equal to the opening area of the inner cylinder 23. The upper opening area of the expanding opening 213 is set to be equal to the opening area of the throat portion 212. In addition, the lower opening area of the expanding opening 213 is set to be equal to the opening area formed by the inner peripheral surface 21a of the gasification furnace main body 21.

As shown in FIG. 2, in the upper portion of the inner cylinder 23, a level sensor 25 is provided, as a fuel detection unit to detect a height position of the fuel 5 (accumulation height of the fuel) that has accumulated in the inner cylinder 23. The level sensor 25 includes a chain 252 and a measurement portion 253. The chain 252 hangs down in the inner axis direction (vertical direction) of the inner cylinder 23 and has a weight 251 at the lower end thereof. The measurement portion 253 has a drive portion to wind up and down the chain 252 so as to have the weight 251 go up and down. When measuring, with the level sensor 25, an upper surface position of the fuel 5 accumulated in the inner cylinder 23, the weight 251 goes down due to extension of the chain 252. When the weight 251 makes contact with the fuel 5, the measurement portion 253 detects a change in the weight of the weight 251 (change in the weight balance of the weight), thus, the height of the fuel 5 can be obtained. Such a level detection of the fuel 5 is carried out on a regular and continuous basis (for example, at one-minute intervals).

As shown in FIG. 2, in the gasification furnace main body 21, a pressure sensor 26 as the fuel detection unit is provided. The pressure sensor 26 detects a pressure in the gasification furnace main body 21 (hereinafter referred to as the "inner pressure"). The pressure sensor 26 is mounted on the upper portion in the gasification furnace 20, preferably on the upper end portion. That is, the pressure sensor 26 is located separated apart from the fuel 5 accumulated in the gasification furnace 20.

As shown in FIG. 2, in the gasification furnace main body 21, a temperature sensor 27 as the fuel detection unit is provided. The temperature sensor 27 is mounted on the upper portion of the inner peripheral surface 21a of the gasification furnace main body 21. That is, the temperature sensor 27 is located separated apart from the fuel 5 accumulated in the gasification furnace 20.

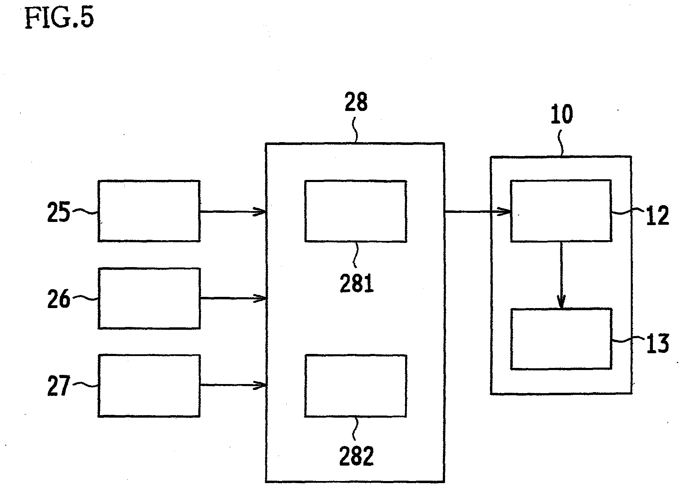

As shown in FIG. 5, the level sensor 25, the pressure sensor 26 and the temperature sensor 27 are connected to a control apparatus 28. The control apparatus 28 controls the motor 12 of the fuel supply apparatus 10 based on respective detected signals of the level sensor 25, the pressure sensor 26 and the temperature sensor 27. The motor 12 of the fuel supply apparatus 10 is connected to the control apparatus 28. The control apparatus 28 includes a processing portion 281 and a memory 282.

The processing portion 281 is constituted by a CPU (Central Processing Unit) and the like. The memory 282 is constituted by a ROM (Read Only Memory), a RAM (Random Access Memory) and the like.

Next, gasification of the fuel 5 will be described, using the above-configured gasification system 1.

The fuel 5 is fed into the hopper 11 of the fuel supply apparatus 10. The fuel supply apparatus 10 is controlled by the control apparatus 28. The motor 12 causes the screw 13 to rotate at a predetermined rotation speed. The fuel 5 is supplied to the inner cylinder 23 of the gasification furnace 20 via the screw 13. The fuel 5 fed into the inner cylinder 23 is supplied to the gasification furnace main body 21, and is accumulated up to a predetermined height upward from the lower end opening of the inner cylinder 23. Then, the fuel 5 begins to burn to become gas. As shown in FIG. 2, the fuel 5 accumulated in the inner cylinder 23 includes, from the upper portion, a dry layer/dry distillation layer A, an oxidation layer B and a reduction layer C.

The gas generated in the gasification furnace 20 is supplied to the centrifuge apparatus 30. The centrifuge apparatus 30 removes large particles of dust and the like contained in the gas from the gasification furnace 20 by centrifugation.

After the centrifuge apparatus 30 removed the large particles of dust and the like included in the gas, such a gas is supplied to the heat exchanger 40 so as to be cooled. The gas cooled by the heat exchanger 40 is further supplied to the scrubber 50 so as to be cleaned and cooled by water.

Furthermore, the filter 80 filters small particles of dust and the like contained in the gas. The induced draft blower 90 induces the gas from the gasification furnace 20 to the side of the engine generating apparatus 100 by a negative pressure operation. The engine generating apparatus 100 drives the generator by the gas engine. The surplus gas combustion apparatus 200 burns the surplus gas.

Here, control of the fuel supply apparatus 10 by the control apparatus 28 will be described in detail. FIG. 4 is a block diagram showing control of the fuel supply apparatus, and FIG. 5 is a block diagram of the fuel supply apparatus.

First, a basic feeding frequency f1 is set so as to control the motor 12 of the fuel supply apparatus 10 (S1). The basic feeding frequency f1 is appropriately determined based on a kind of the fuel 5, properties of each gasification system 1 and the like.

The fuel supply apparatus 10 starts to feed the fuel 5 by operation of motor 12 (S2). A frequency f of the motor 12 is adjusted to be coincident with the basic feeding frequency f1 (S3).

Also, an inside furnace level target value H1 of the fuel 5 is set (S4). The inside furnace level target value H1 indicates the height position of the fuel 5 accumulated from the lower end opening 235 of the inner cylinder 23. At the inside furnace level target value H1 of the fuel 5, an optimal gas-generation efficiency is obtained. At this time, the fuel accumulated in the inner cylinder 23 includes, from the upper portion, the dry layer/dry distillation layer A, the oxidation layer B and the reduction layer C. In the inner portion of the cylinder (especially at the oxidation layer B), a temperature range of substantially 1100°C is made.

Like this, it is preferable to carry out gasification with high efficiency by maintaining the fuel at the inside furnace level target value H1. If the feeding amount of the fuel is too much (the accumulation position of the fuel is too high beyond the inside furnace level target value H1), the fuel 5 forms a bridge inside the inner cylinder 23, thus it is not possible to carry out gasification with high efficiency. For this reason, a height at which the fuel 5 in the inner cylinder 23 forms a bridge (inside furnace level upper limit) Hh is measured by carrying out actual tests in advance (S5).

Next, a measurement of a level of the fuel 5 inside the inner cylinder 23 is carried out by the fuel detection unit (S6), so that an inside furnace level H of the fuel 5 is detected (S7).

Furthermore, the measured inside furnace level H is compared with the predetermined inside furnace level upper limit Hh. If the inside furnace level H is determined to be lower than the inside furnace level upper limit Hh (S8Y), the control apparatus 28 obtains a deviation ΔH between the inside furnace level target value H1 and the inside furnace level H (S9).

Based on the obtained deviation ΔH, a corrected frequency Δf is calculated (S10). Furthermore, the corrected frequency Δf is added to the basic feeding frequency f1, thus a new frequency f is calculated (S11). Then, the motor 12 is controlled according to the new frequency f obtained as above.

If the inside furnace level H is determined to be equal to or higher than the inside furnace level upper limit Hh (S8N), the fuel supply apparatus 10 is stopped (S12).

If the fuel detection unit is the level sensor 25, the level sensor 25 measures the inside furnace level. Thus, a deviation ΔH1 is obtained based on the inside furnace level target value H1 and the inside furnace level H. Then, the corrected frequency f can be obtained based on the deviation ΔH1. Such a level detection by measurement by the level sensor 25 is carried out on a regular and continuous basis (at one-minute intervals).

If the fuel detection unit is the pressure sensor 26, a deviation ΔHp is obtained, by the pressure sensor 26, based on the inside furnace level target value H1 and the inside furnace level H. It is a state in which the fuel 5 is at the inside furnace level target value H1, i.e. the feeding amount and the combustion state of the fuel 5 are appropriate. Here, a detected pressure of the pressure sensor 26 is set to be within a range of the negative pressure (predetermined pressure value). If the inner pressure detected by the pressure sensor 26 becomes higher than the predetermined pressure value (close to atmospheric pressure), there may occur air drift in the gasification furnace main body 21 (inside the inner cylinder 23). Such air drift means that, in the fuel 5 accumulated inside the inner cylinder 23, there are portions where it is difficult/easy for the air to flow. Where it is difficult for the air to flow, the temperature decreases and tar is generated easily. Where it is too easy for the air to flow, the air is likely to be supplied in the inner space of a double structure (space formed by the inner peripheral surface of the gasification furnace main body 21 and the outer peripheral surface of the inner cylinder 23), which may be a cause of combustion of the generated gas. In such a case, it is necessary to prevent the air drift by increasing the feeding amount of the fuel 5 so that the fuel level becomes high.

Based on the detected pressure by the pressure sensor 26, the inside furnace level H is calculated, and the deviation ΔHp is calculated. Here, the inside furnace level H and the inner pressure are set so that they have a certain relation.

If the fuel detection unit is the temperature sensor 27, a deviation ΔHt is obtained, by the temperature sensor 27, based on the inside furnace level target value H1 and the inside furnace level H. That is, if the feeding amount and the combustion state of the fuel 5 are appropriate (when the fuel 5 is at the inside furnace level target value H1), the temperature sensor 27 is maintained within a range of certain values. When the temperature becomes too high, the air drift occurs inside the inner cylinder 23, thus the air is likely to be supplied in the inner space of the double structure, which may be a cause of combustion of the generated gas. In such a case, it is necessary to prevent the air drift by increasing the feeding amount of the fuel 5 so that the fuel level becomes high.

When the temperature changes, the above problem occurs. Thus, it is necessary to increase the feeding amount of fuel 5 so that the fuel level becomes further high, thus improving a uniform air flow.

For this reason, based on the detected temperature by the temperature sensor 27, the inside furnace level H is calculated, and the deviation ΔHt is calculated. Here, the inside furnace level H and the temperature are set so that they have a certain relation.

Furthermore, when the level sensor 25, the pressure sensor 26 and the temperature sensor 27 are simultaneously used as the fuel detection units, each of the deviations ΔH1, ΔHp and ΔHt is calculated. In consideration of the respective deviations, a total deviation ΔH is calculated. Specifically, k1ΔH1, k2ΔHp and k3ΔHt, which are reduced into respective predetermined ratios, are obtained. For example, when k1=0.8, k1=0.1 and k1=0.1 are set, ΔH = 0.8ΔHl + 0.1ΔHp + 0.1ΔHt is satisfied. Thus, the deviation ΔHl obtained from the level sensor 25 is mainly used. The deviation ΔHp obtained from the pressure sensor 26 and the deviation ΔHt obtained from the temperature sensor 27 are supplementarily adopted.

As described above, with any one of the level sensor 25, the pressure sensor 26 and the temperature sensor 27 as the fuel detection unit, it is possible to control the fuel level inside the inner cylinder 23 to be the inside furnace level target value. Also, it is possible to form a heat-insulating layer (heat-insulating layer that covers the outer periphery of the inner cylinder 23) that is made by the high temperature gas partially remaining in the space of the double structure of the inner cylinder 23 and the gasification furnace main body 21.

Therefore, with the gas in the heat-insulating layer, the temperature inside the inner cylinder 23 can become high enough to reduce the tar (for example, substantially 1000°C). Thus, In contrast to the conventional art, it is not necessary to dispose a nozzle to supply air, and production of clinker caused by the locally high temperature can be prevented.

Also, it is possible to form a compact combustion layer inside the inner cylinder 23 having a small diameter. Thus, it is possible to reduce influence of the wall flow due to a repose angle inside the inner cylinder 23, and to reduce unevenness of the temperature in the outer periphery direction inside the inner cylinder 23.

In addition, the portion for supplying the air and the fuel is made as the double structure of the inner cylinder 23 and the gasification furnace main body 21, and furthermore the constricted portion 210 is provided that has a small opening area. Thus, the gas flow in the central portion of the gasification furnace main body 21 can be maintained, thereby radiation loss can be reduced and a high thermal efficiency can be obtained.

Also, in the event that an abnormal situation occurs due to lowering of the fuel level inside the inner cylinder, i.e., that the level of the fuel 5 becomes lower than the lower end opening of the inner cylinder 23, the air that has passed through the inner cylinder 23 expands along the fuel 5, thus makes a wall flow that intends to pass the inner peripheral surface 21a of the gasification furnace main body 21. In this embodiment, the constricted portion 210 is provided on the inner peripheral surface 21a of the gasification furnace main body 21. The air is drawn, along the constricted portion 210, to the central portion of the gasification furnace main body 21. As a result, the temperature of the fuel 5 that exists in the constricted portion 210 becomes high, thereby an oxidation layer is formed in the constricted portion 210. Thus, the gasification is accelerated. In addition, the tar produced due to generation of the wall flow necessarily passes through the high temperature portion of the constricted portion 210. Therefore, problems caused by the tar can be reduced.

According to the combustion state (disturbance) inside the furnace, the inside furnace level changes. It is possible to generate a stable gas containing only a small amount of tar by controlling the feeding amount of the fuel to maintain the fuel level suitable for gasification.

The present invention is not limited to the above embodiment. For example, in the above embodiment, the configuration having the constricted portion 210 on the inner surface of the gasification furnace main body 21 is exemplarily presented. However, the constricted portion 210 is not necessarily required. Also, it is possible to adopt any shape such as a circular shape and a rectangular shape as the shape of the cross-sectional opening of the gasification furnace main body 21 and the inner cylinder 23.

The present invention may be embodied in other forms without departing from the gist or essential characteristics thereof. The foregoing embodiments are therefore to be considered in all respects as illustrative and not limiting. The scope of the invention is indicated by the appended claims rather than by the foregoing description.

This application claims priority on Patent Application No. 2011-282094 filed in Japan on December 22, 2011.

### Industrial Applicability

The present invention relates to a gasification system, and specifically, it is applicable to a technique for controlling fuel fed in a gasification furnace. The present invention is suitable for stable gasification and for preventing production of tar and production of clinker caused by melting of ash by controlling an amount of fuel to be supplied to an inner cylinder so that a height of the fuel accumulated in the inner cylinder becomes an inside furnace level target value.

### Description of Reference Numerals

- 1: Gasification system
- 5: Fuel
- 10: Fuel supply apparatus
- 12: Motor
- 13: Screw
- 20: Gasification furnace
- 21: Gasification furnace main body
- 23: Inner cylinder
- 25: Level sensor
- 26: Pressure sensor
- 27: Temperature sensor
- 28: Control apparatus
- 210: Constricted portion
- 211: Narrowing opening
- 211a: Inclined surface
- 212: Throat portion
- 213: Expanding opening
- 235: Lower end opening
- H1: Inside furnace level target value
- H: Inside furnace level
- Hh: Inside furnace level upper limit
- ΔH: Deviation

## Claims

1. A gasification system (1) comprising:
a gasification furnace (20) configured to gasify fuel (5);
a fuel supply apparatus (10) configured to supply fuel (5) to the gasification furnace (20); and
an inner cylinder (23) configured to introduce the fuel (5) and air into the gasification furnace (20), the inner cylinder (23) being included in the gasification furnace (20); wherein a height from a lower end opening (235) in the inner cylinder (23) to a predetermined height position is set as an inside furnace level target value (H1), and an inside furnace level upper limit (Hh) is set,
wherein the gasification system (1) further includes:
a fuel detection unit (25, 26, 27) configured to detect, as an inside furnace level (H), an accumulated height of the fuel (5) accumulated inside the inner cylinder (23); and
a control apparatus (28) configured to determine the inside furnace level (H) and control the fuel supply apparatus (10), wherein, when the inside furnace level (H) is determined to be equal to or higher than the inside furnace level upper limit (Hh), the fuel supply apparatus (10) is stopped, and when the inside furnace level (H) is determined to be lower than the inside furnace level upper limit (Hh), a deviation (ΔH) between the inside furnace level target value (H1) and the inside furnace level (H) is obtained and the fuel supply apparatus (10) is controlled according to the deviation ΔH so that the inside furnace level (H) is coincident with the inside furnace level target value (H1).

2. The gasification system (1) according to claim 1,
wherein the fuel detection unit (25, 26, 27) is constituted by a level sensor (25) that is inserted into the inner cylinder (23), from above, so as to make contact with the fuel (5), and
wherein the level sensor (25) measures the inside furnace level (H).

3. The gasification system (1) according to claim 1,
wherein the fuel detection unit (25, 26, 27) is constituted by a pressure sensor (26) that measures a pressure of a space inside the gasification furnace (20).

4. The gasification system (1) according to claim 1,
wherein the fuel detection unit (25, 26, 27) is constituted by a temperature sensor (27) that measures a temperature of a space inside the gasification furnace (20).

5. The gasification system (1) according to any one of claims 1 to 4,
wherein a constricted portion (210) whose opening area is set to be small is located at a position lower than a lower end of the inner cylinder (23) in the gasification furnace (20).

## Patentansprüche

1. Ein Vergasungssystem (1), umfassend:
einen Vergasungsofen (20), der konfiguriert ist, um Brennstoff (5) zu vergasen;
ein Brennstoffzufuhrgerät (10), das konfiguriert ist, um dem Vergasungsofen (20) Brennstoff (5) zuzuführen; und
einen inneren Zylinder (23), der konfiguriert ist, um den Brennstoff (5) und Luft in den Vergasungsofen (20) einzuleiten, und der innere Zylinder (23) in dem Vergasungsofen (20) enthalten ist; wobei eine Höhe von einer unteren Endöffnung (235) in dem innerem Zylinder (23) zu einer vorbestimmten Höhenposition als ein Zielwert (H1) des Innenofenpegels festgelegt ist, und ein oberer Grenzwert (Hh) des Innenofenpegels festgelegt ist,
wobei das Vergasungssystem (1) ferner enthält:
eine Brennstofferfassungseinheit (25, 26, 27), die konfiguriert ist, um eine angesammelte Höhe des Brennstoffes (5), der sich innerhalb des inneren Zylinders (23) angesammelt hat, als einen Innenofenpegel (H) zu erfassen; und
ein Steuerungsgerät (28), das konfiguriert ist, um den Innenofenpegel (H) zu ermitteln und das Brennstoffzufuhrgerät (10) zu steuern, wobei, wenn ermittelt wird, dass der Innenofenpegel (H) gleich oder höher ist als der obere Grenzwert (Hh) des Innenofenpegels, das Brennstoffzufuhrgerät (10) angehalten wird, und wenn ermittelt wird, dass der Innenofenpegel (H) niedriger ist als der obere Grenzwert (Hh) des Innenofenpegels, eine Abweichung (ΔH) zwischen dem Zielwert (H1) des Innenofenpegels und dem Innenofenpegel (H) erhalten wird und das Brennstoffzufuhrgerät (10) entsprechend der Abweichung ΔH derart gesteuert wird, dass der Innenofenpegel (H) mit dem Zielwert (H1) des Innenofenpegels zusammenfällt.

2. Das Vergasungssystem (1) nach Anspruch 1,
wobei die Brennstofferfassungseinheit (25, 26, 27) durch einen Pegelsensor (25) gebildet ist, der von oben in den inneren Zylinder (23) eingesetzt ist, um mit dem Brennstoff (5) in Kontakt zu kommen, und
wobei der Pegelsensor (25) den Innenofenpegel (H) misst.

3. Das Vergasungssystem (1) nach Anspruch 1,
wobei die Brennstofferfassungseinheit (25, 26, 27) durch einen Drucksensor (26) gebildet ist, der einen Druck von einem Raum innerhalb des Vergasungsofens (20) misst.

4. Das Vergasungssystem (1) nach Anspruch 1,
wobei die Brennstofferfassungseinheit (25, 26, 27) durch einen Temperatursensor (27) gebildet ist, der eine Temperatur von einem Raum innerhalb des Vergasungsofens (20) misst.

5. Das Vergasungssystem (1) nach einem der Ansprüche 1 bis 4,
wobei ein verengter Abschnitt (210), dessen Öffnungsfläche klein eingestellt ist, an einer Position angeordnet ist, die niedriger ist als ein unteres Ende des inneren Zylinders (23) in dem Vergasungsofen (20).

## Revendications

1. Un système de gazéification (1), comprenant:
un four de gazéification (20) qui est configuré pour gazéifier un combustible (5);
un dispositif de fourniture de combustible (10) qui est configuré pour fournir le combustible (5) au four de gazéification (20); et
un cylindre intérieur (23) qui est configuré pour introduire le combustible (5) et de l'air dans le four de gazéification (20), et le cylindre intérieur (23) est contenu dans le four de gazéification (20); dans lequel une hauteur à partir d'une ouverture de l'extrémité inférieure (235) dans le cylindre intérieur (23) à une position de hauteur prédéterminée est fixée comme une valeur de consigne (H1) du niveau de four intérieur, et une valeur limite supérieure (Hh) du niveau de four intérieur est fixée,
dans lequel le système de gazéification (1) comprend en outre:
une unité de détection de combustible (25, 26, 27) qui est configurée pour détecter une hauteur accumulée du combustible (5) qui s'est accumulé à l'intérieur du cylindre intérieur (23) comme un niveau de four intérieur (H); et
un dispositif de commande (28) qui est configuré pour déterminer le niveau de four intérieur (H) et pour commander le dispositif de fourniture de combustible (10), dans lequel, lorsqu'il est déterminé que le niveau de four intérieur (H) est égal ou supérieur à la valeur limite supérieure (Hh) du niveau de four intérieur, le dispositif de fourniture de combustible (10) est arrêté, et lorsqu'il est déterminé que le niveau de four intérieur (H) est inférieur à la valeur limite supérieure (Hh) du niveau de four intérieur, une déviation (ΔH) entre la valeur de consigne (H1) du niveau de four intérieur et le niveau de four intérieur (H) est obtenue et le dispositif de fourniture de combustible (10) est commandé en fonction de la déviation (ΔH) de sorte que le niveau de four intérieur (H) coïncide avec la valeur de consigne (H1) du niveau de four intérieur.

2. Le système de gazéification (1) selon la revendication 1,
dans lequel l'unité de détection de combustible (25, 26, 27) est formée par un capteur de niveau (25) qui est inséré par le haut dans le cylindre intérieur (23) pour venir en contact avec le combustible (5), et
dans lequel le capteur de niveau (25) mesure le niveau de four intérieur (H).

3. Le système de gazéification (1) selon la revendication 1,
dans lequel l'unité de détection de combustible (25, 26, 27) est formée par un capteur de pression (26), qui mesure une pression d'un espace à l'intérieur du four de gazéification (20).

4. Le système de gazéification (1) selon la revendication 1,
dans lequel l'unité de détection de combustible (25, 26, 27) est formée par un capteur de température (27), qui mesure une température d'un espace à l'intérieur du four de gazéification (20).

5. Le système de gazéification (1) selon l'une quelconque des revendications 1 à 4,
dans lequel une partie rétrécie (210) dont la zone d'ouverture est fixée petite, est disposée à une position qui est inférieure à une extrémité inférieure du cylindre intérieur (23) dans le four de gazéification (20).
